# FASCICULE DE BREVET EUROPEEN

(11) **EP 3 967 022 B1**
(45) Date de publication et mention de la délivrance du brevet: **29.05.2024**
(21) Numéro de dépôt: 20718694.1
(22) Date de dépôt: 21.04.2020
(51) Int. Cl.: H04W 74/08, H04W 16/14

(54) **PROCÉDÉ AVEC ACCÈS LBT AU CANAL, DISPOSITIF ET PROGRAMME CORRESPONDANTS**
VERFAHREN, GERÄT, PROGRAMME FÜR DEN LBT-KANALZUGANG
METHOD TO ACCESS AN LBT CHANNEL, APPARATUS AND PROGRAMME THEREOF

(30) Priorité: 06.05.2019 FR 1904717
(43) Date de publication de la demande: 16.03.2022
(73) Titulaire: Orange, 92130 Issy-les-Moulineaux (FR)
(72) Inventeur: LIN, Hao, 92326 Châtillon Cedex (FR); REDIETEAB, Getachew, 92326 Châtillon Cedex (FR)
(86) Numéro de dépôt international: PCT/EP2020/061056
(87) Numéro de publication internationale: WO 2020/224947

(56) Documents cités:
- US-A1- 2019 132 876
- ZTE ET AL: "Framework on potential solutions and techniques for NR-U", 3GPP DRAFT; R1-1801466 - 7.6.4 FRAMEWORK ON POTENTIAL SOLUTIONS AND TECHNIQUES FOR NR-U, 3RD GENERATION PARTNERSHIP PROJECT (3GPP), MOBILE COMPETENCE CENTRE ; 650, ROUTE DES LUCIOLES ; F-06921 SOPHIA- , vol. RAN WG1, no. Athens, Greece; 20180226 - 20180302 17 février 2018 (2018-02-17), XP051397565, Extrait de l'Internet: URL:http://www.3gpp.org/ftp/tsg%5Fran/WG1% 5FRL1/TSGR1%5F92/Docs/ [extrait le 2018-02-17]
- SHARP: "Channel access procedures for NR unlicensed operation", 3GPP DRAFT; R1-1813206, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20181112 - 20181116 11 novembre 2018 (2018-11-11), XP051555209, Extrait de l'Internet: URL:http://www.3gpp.org/ftp/Meetings%5F3GP P%5FSYNC/RAN1/Docs/R1%2D1813206%2Ezip [extrait le 2018-11-11]

## Description

### Domaine de l'invention

La présente invention se rapporte au domaine des télécommunications. Au sein de ce domaine, l'invention se rapporte plus particulièrement aux procédés d'émission et de réception pour permettre une coexistence dans une même bande de fréquence non licenciée de plusieurs transmissions qui peuvent être asynchrones. Elle s'applique notamment aux dispositifs portables de télécommunication.

### Art antérieur

Le support de transmission des communications est couramment appelé canal de transmission ou de propagation, à l'origine en référence à un canal aérien et par extension en référence à tout canal. Les systèmes sans fil ont une interface de transmission radio fréquence dite RF (Radio Frequency) lorsqu'il s'agit d'un système de télécommunication avec une transmission aérienne d'un signal appartenant à une bande radio (par exemple, de type GSM, UMTS, IEEE 802.11x, IEEE 802.16e). Parmi ces systèmes on distingue les systèmes d'accès cellulaires dits encore mobiles spécifiés plus particulièrement par le 3GPP (Third Génération Partnership Program) et des systèmes non mobiles qui comprennent essentiellement ceux basés sur une norme Wi-Fi spécifiés plus particulièrement par l'IEEE.

Dans le cadre des travaux menés au sein du 3GPP et qui ont conduit à la version 13 de la norme LTE, le mécanisme d'accès LAA (License Assisted Access) a été introduit et spécifié dans la bande radio non licenciée 5GHz commune à celle utilisée par des équipements Wi-Fi. Ce mécanisme utilise le mécanisme LBT (Listen Before Talk), i.e. écoute avant de parler et notamment un mode dit de catégorie 4 (cat4 scheme) LAA est basé sur la procédure EDCA (Enhanced Distributed Channel Access) du Wi-Fi qui permet d'améliorer la coexistence avec d'autres communications et plus particulièrement avec celles intervenant dans la bande non licenciée du LTE.

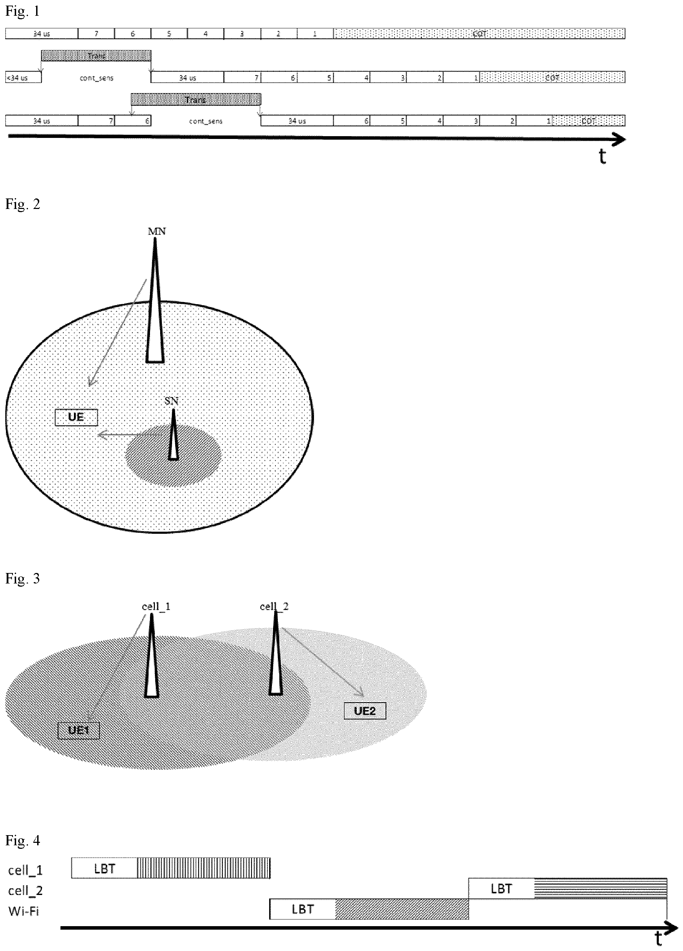

Le mode cat4 LBT est illustré par la figure 1. Quand un émetteur veut transmettre un signal via le canal, il doit dans une première étape écouter le canal pendant une durée fixe (34µs). Si le canal n'est pas libre, du fait d'une autre transmission, l'émetteur continue d'écouter cont_sens le canal jusqu'à ce que le canal soit libre. Une fois que le canal est libre, l'émetteur attend pendant une même durée fixe (34µs) pendant laquelle le canal doit rester libre. A la fin de cette attente, l'émetteur choisit un nombre aléatoire appelé backoff parmi une échelle de valeurs et démarre le décompte du backoff. Chaque décrémentation prend 9µs pendant lesquelles le canal doit rester libre pour que le compteur soit décrémenté d'une unité. Si le canal ne reste pas libre et devient occupé pendant la durée de décrémentation alors l'émetteur suspend le décompte et reprend l'écoute du canal jusqu'à ce que ce dernier soit de nouveau libre. Dans ce cas, le décompte repart uniquement après une nouvelle durée fixe (34µs) pendant laquelle le canal doit rester libre. A la fin du décompte, l'émetteur peut commencer à transmettre. La durée de la transmission est appelée temps d'occupation du canal (COT: Channel Occupancy Time).

Lorsqu'il écoute le canal, l'équipement utilise un critère basé sur une énergie détectée pour déterminer l'état du canal, occupé (Busy) ou libre (Idle). Ainsi, l'équipement estime l'énergie reçue et la compare à un seuil déterminé. Si l'énergie reçue dépasse le seuil, le canal est considéré occupé. Sinon, le canal est considéré libre.

Dans le cadre des travaux menés au sein du 3GPP pour les spécifications LTE-Advanced et NR (New Radio) de 5ème Génération (5G), il est envisagé des modes avec une connectivité multiple. Ainsi, un équipement utilisateur (UE: User Equipment) peut recevoir des signaux via plusieurs liens servis par un ou plusieurs noeuds, un noeud étant une station de base (BS: Base Station). Un noeud peut avoir plusieurs cellules par exemple lorsqu'il est équipé de plusieurs antennes directionnelles qui chacune permette d'établir un lien avec un équipement utilisateur.

Un scénario de connectivité multiple envisagé par le 3GPP dans le contexte des réseaux NR (5G), est celui de connectivité double (DC: Dual Connectivity) selon lequel un terminal a la possibilité d'être connecté simultanément à un noeud dit maître MN (« Master Node ») et à un noeud dit secondaire NS (« Secondary Node »), le noeud maître et le noeud secondaire n'étant pas forcément co-localisés et pouvant opérer dans des bandes de fréquences distinctes comme illustré par la figure 2. Les deux noeuds servent simultanément un même équipement utilisateur UE, i.e. les transmissions des deux noeuds interviennent en même temps. La double connectivité est un mécanisme qui permet avantageusement d'agréger les ressources radios et notamment les débits offerts par les noeuds maître et secondaire.

Les opérateurs des réseaux de télécommunications sont constamment à la recherche de mécanismes pour augmenter les débits. Considérons le cas de deux cellules, cell_1, cell_2, qui peuvent servir différents équipements utilisateur, UE1, UE2, comme illustré par la figure 3 conformément au scénario de connectivité multiple des spécifications NR. Si les cellules font partie d'un réseau d'accès cellulaire, alors les deux cellules, cell_1, cell_2, peuvent fonctionner en même temps et peuvent servir différents équipements utilisateur, UE1, UE2, en même temps. Ceci permet d'obtenir un système de communication efficace tant en terme d'utilisation spectrale qu'en terme de latence.

Toutefois, un tel fonctionnement ne peut pas être directement transposé dans la bande non licenciée du fait du mécanisme imposé d'accès au canal de type LBT. En effet, la transmission d'une cellule empêche l'autre cellule de transmettre simultanément si les deux cellules ne sont pas suffisamment éloignées l'une de l'autre pour assurer que l'énergie détectée par l'autre cellule ne dépasse pas le seuil déterminé. Un tel scénario est observé aussi bien dans le contexte d'un réseau hétérogène que dans le contexte d'un réseau homogène.

Le cas d'un réseau hétérogène est décrit à l'appui de l'exemple illustré par la figure 4 où deux cellules cell_1, cell_2, appartenant à un ou plusieurs noeuds d'un réseau d'accès cellulaire, coexistent avec un noeud Wi-Fi. Si on considère que chaque noeud a une probabilité identique d'accès au canal alors les deux cellules cell_1, cell_2 ne peuvent pas accéder simultanément au canal et doivent être multiplexées en temps. La transmission d'une cellule est donc différée du fait du mécanisme LBT qui impose d'attendre que le canal soit libre, introduisant de ce fait un décalage temporel entre deux transmissions mettant en oeuvre des noeuds différents.

Même en l'absence du noeud Wi-Fi, i.e. dans le cas d'un réseau homogène, ce décalage temporel existe lorsque les transmissions interviennent dans la bande non licenciée.

Ce décalage temporel augmente bien entendu la latence, conduit à une dégradation de la QoS (Quality of Service) comparativement à un réseau d'accès multicellulaires homogène fonctionnant dans une bande licenciée.

Il existe donc un besoin pour une technique permettant d'augmenter l'efficacité spectrale du canal de transmission lorsque son accès est du type LBT, i.e. écoute avant de parler, en particulier dans un contexte de réseau hétérogène avec coexistence entre une technologie Wi-Fi et un réseau d'accès mobile, par exemple de type LTE, dans une bande commune, par exemple la bande 5GHz non licenciée.

Les documents:
- US2019/132876 A1 (SHIKARI MURTAZA A [US] ET AL), 2 mai 2019
- ZTE ET AL: "Framework on potential solutions and techniques for NR-U",3GPP DRAFT; R1-1801466, 17 février 2018
- SHARP: "Channel access procedures for NR unlicensed operation",3GPP DRAFT; R1-1801466, 11 novembre 2018
fournissent des enseignements complémentaires sur le contexte de la présente demande.

### Exposé de l'invention

L'invention propose un procédé de transmission de données mis en oeuvre par un équipement ayant une cellule conforme à un premier protocole d'un réseau d'accès cellulaire, apte à émettre dans une bande de fréquence partagée avec un réseau conforme à un deuxième protocole et à mettre en oeuvre un mécanisme d'accès de type écoute avant de transmettre. Le procédé comprend :
- l'utilisation du mécanisme d'accès de type écoute avant de transmettre par une autre cellule dite première cellule et transmission par cette première cellule d'une identification d'un premier groupe de partage, d'une première information de partage du canal et d'une durée de transmission,
- l'autorisation du partage du canal avec la première cellule à condition au moins que la deuxième cellule appartienne au même premier groupe de partage, que la première information de partage du canal autorise ce partage et que la puissance interférente ne dépasse pas un seuil donné, cette puissance interférente étant déterminée par la deuxième cellule comme étant une puissance totale reçue par la deuxième cellule moins une puissance reçue associée à une transmission de la première cellule,
- l'utilisation du mécanisme d'accès de type écoute avant de transmettre avec adaptation par la cellule dite deuxième cellule telle que cette deuxième cellule détermine une puissance interférente séparément d'une puissance reçue associée à une transmission de la première cellule.

Tout équipement/cellule mettant en oeuvre un mécanisme d'accès de type écoute avant de transmettre qui détecte une transmission par une première cellule, c'est-à-dire une puissance reçue qui dépasse un certain seuil, considère le canal comme occupé pendant toute la durée de cette transmission et ne peut accéder au canal pendant cette durée.

Par contre, dans le cas où une cellule appartient au même groupe de partage que la première cellule et que l'information de partage du canal autorise ce partage, si cette cellule met en oeuvre le mécanisme d'accès de type écoute avant de transmettre adapté conformément à l'invention alors elle évalue la part de puissance reçue attribuée uniquement à des interféreurs dite puissance interférente parmi la puissance totale reçue ; elle écarte donc de la puissance totale reçue la puissance reçue attribuée à la première cellule. Si ce niveau évalué d'interférence ne dépasse pas le certain seuil, la cellule considère le canal comme libre dans certaines conditions, i.e. elle peut prendre le canal pour transmettre mais uniquement pendant la durée de transmission de la première cellule.

Ainsi, l'invention permet une connectivité multi-noeuds ou multi cellules dans la bande avec un mécanisme d'accès de type écoute avant de transmettre et permet d'augmenter l'efficacité spectrale et de réduire la latence pour des services de télécommunication. Cette bande avec un mécanisme d'accès de type écoute avant de transmettre peut être une bande non licenciée d'un réseau d'accès NR-U (5G).

L'invention a en outre pour objet un équipement ayant une deuxième cellule, conforme à un premier protocole d'un réseau d'accès cellulaire et apte à émettre dans une bande de fréquence partagée avec un réseau conforme à un deuxième protocole, mettant en oeuvre un mécanisme d'accès de type écoute avant de transmettre, l'équipement comprenant :
- un récepteur apte à recevoir dans la bande de fréquence partagée une identification d'un groupe de partage, une information de partage du canal et une durée de transmission transmises par une première cellule du réseau d'accès cellulaire,
- un émetteur apte à émettre des données dans la bande de fréquence partagée,
- un processeur pour :
   - piloter l'émetteur et le récepteur et mettre en oeuvre un mécanisme d'accès de type écoute avant de transmettre avec adaptation tel que le processeur détermine une puissance interférente séparément d'une puissance reçue associée à une transmission de la première cellule,
   - autoriser un partage du canal avec la première cellule à condition au moins que la deuxième cellule appartienne au même groupe de partage, que l'information de partage du canal autorise ce partage et que la puissance interférente ne dépasse pas un seuil donné, cette puissance interférente étant déterminée par la deuxième cellule comme étant une puissance totale reçue par la deuxième cellule moins une puissance reçue associée à une transmission de la première cellule,

Selon un mode de réalisation particulier de l'invention, la puissance interférente est déterminée comme étant la puissance totale reçue moins la puissance reçue associée à une transmission de la première cellule.

Selon un mode de réalisation particulier de l'invention, une ressource temps-fréquence déterminée exclue de ressources temps-fréquence dédiées à une transmission de la première cellule est utilisée pour déterminer la puissance reçue associée à une transmission de la première cellule.

Selon ce mode, la puissance reçue sur la ressource temps-fréquence déterminée correspond à une interférence pure qui permet d'évaluer la puissance reçue associée à une transmission de la première cellule.

Selon un mode de réalisation particulier de l'invention, une transmission de données par la deuxième cellule partage le canal avec la première cellule et se termine au plus tard à la fin de la durée de transmission de la première cellule.

Ce mode assure une absence de perturbation de tout autre équipement lors de son accès au même canal.

Selon un mode de réalisation particulier de l'invention, la deuxième cellule qui partage le canal avec la première cellule transmet une durée de transmission adaptée qui se termine lorsque la durée de transmission de la première cellule se termine, transmet une identification d'un deuxième groupe de partage et une deuxième information de partage du canal.

Ce mode assure que si une troisième cellule partage le canal avec la deuxième cellule alors ce partage peut se terminer au plus tard avec la fin de la transmission de la première cellule. Ceci assure une coexistence juste avec d'autres cellules ou noeuds Wi-Fi dans le même canal.

Selon un mode de réalisation particulier de l'invention, le deuxième groupe de partage est différent du premier groupe de partage.

Selon un mode de réalisation particulier de l'invention, une identification d'un groupe de partage, une information de partage du canal et une durée de transmission font partie d'une signalisation de la couche physique.

Selon un mode de réalisation particulier de l'invention, l'identification d'un groupe de partage, l'information de partage du canal et la durée de transmission font partie d'un champ de signalisation qui précède un champ de données transmises, ce champ de signalisation permettant l'adaptation de la transmission à des contraintes d'une bande non licenciée.

Selon ce mode de réalisation, la signalisation de la couche physique est portée par un champ SIG. Compte tenu que ce champ est toujours positionné au début de la durée de transmission, sa lecture peut être rapide. Ainsi, le mécanisme de partage du canal peut rapidement être activé.

Selon un mode de réalisation particulier de l'invention, une identification d'un groupe de partage, une information de partage du canal et une durée de transmission font partie d'une signalisation de la couche RRC.

Selon ce mode, les informations peuvent être portées par un canal de signalisation classique tel que le canal PDSCH d'un standard 3GPP ; aucun nouveau canal de signalisation n'est nécessaire selon ce mode.

Selon un mode de réalisation particulier de l'invention, l'identification d'un groupe de partage, l'information de partage du canal et la durée de transmission font partie d'un champ de données transmises.

Ce mode a pour avantage de ne pas nécessiter la réservation de ressource dans un préambule.

Selon un mode de réalisation particulier de l'invention, l'identification d'un groupe de partage comprend au moins une identité d'un opérateur de la première cellule et de la deuxième cellule, une identité du noeud associé à la première cellule, une identité de la première cellule, une identité du noeud associé à la deuxième cellule, une identité de la deuxième cellule.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig. 1] la figure 1 est un schéma illustrant le décompte des compteurs d'attente de trois équipements qui partagent un même canal et mettent en oeuvre le mode cat4 LBT selon lequel la fenêtre de contention a une taille variable,
[Fig. 2] la figure 2 est un schéma d'un réseau d'accès NR (5G) à deux noeuds, un noeud maître et un noeud secondaire, illustrant un scénario de connectivité double d'un terminal au noeud maître et au noeud secondaire,
[Fig. 3] la figure 3 est un schéma d'un réseau d'accès NR (5G) à deux noeuds portant respectivement deux cellules qui servent chacune un ou plusieurs équipements utilisateurs illustrant un scénario de connectivité multiple,
[Fig. 4] la figure 4 est un schéma d'un canal auquel accède un équipement Wi-Fi et deux cellules illustrant le décalage temporel dans l'accès au canal compte tenu du mécanisme LBT,
[Fig. 5] la figure 5 est un schéma d'un canal auquel accède un équipement Wi-Fi et deux cellules illustrant le partage du canal compte tenu du mécanisme LBT adapté selon l'invention,
[Fig. 6] la figure 6 est un organigramme d'un procédé de transmission selon l'invention,
[Fig. 7] la figure 7 est un schéma illustrant le mécanisme LBT,
[Fig. 8] la figure 8 est un schéma illustrant le mécanisme LBT adapté selon l'invention,
[Fig. 9] la figure 9 est un schéma de la répartition temps-fréquence des ressources CSI-IM dédiées à la mesure d'interférence,
[Fig. 10] la figure 10 est la table 1,
[Fig. 11] la figure 11 est la table 2,
[Fig. 12] la figure 12 est la table 3,
[Fig. 13] la figure 13 est la table 4,
[Fig. 14] la figure 14 est un schéma d'une structure simplifiée d'un équipement NR-U selon l'invention apte à mettre en oeuvre un procédé de transmission selon l'invention

### Description d'un mode de réalisation de l'invention

Le principe général de l'invention repose sur le partage du canal entre équipements d'un groupe de partage lors de la transmission d'un de ces équipements dit équipement partageur si la puissance interférant l'équipement du groupe souhaitant bénéficier du partage est inférieure à un seuil et ce, même si la puissance totale reçue par cet équipement dépasse le seuil.

Lors de la transmission de l'équipement partageur, celui-ci autorise ou pas le partage du canal avec un ou plusieurs équipements du même groupe de partage.

Les équipements autorisés à partager le canal sont donc autorisés à transmettre pendant la transmission de l'équipement partageur alors qu'avec un mécanisme d'accès classique au canal ces équipements ne peuvent pas accéder au canal déjà occupé.

Lorsqu'un équipement bénéficie du partage du canal, sa transmission doit impérativement se terminer au plus tard en même temps que celle de l'équipement partageur même si sa transmission démarre après celle de l'équipement partageur.

Un équipement qui bénéficie du partage du canal peut lui-même autoriser un partage du canal à un ou des équipements d'un autre groupe de partage. Si un équipement bénéficie du partage, sa transmission doit impérativement se terminer au plus tard en même temps que celle de l'équipement partageur initial même si sa transmission démarre après celle de l'équipement partageur.

### Exemples de mise en œuvre

Selon un mode de réalisation le canal appartient à la bande non licenciée des spécifications NR (5G) du 3GPP qui est commune à une bande Wi-Fi, dite NR-U.

Pour accéder à ce canal, un équipement qu'il soit compatible d'un réseau d'accès radio NR-U et/ou compatible d'une norme Wi-Fi doit mettre en oeuvre un mécanisme classique d'accès au canal LBT écoute avant de transmettre.

Un équipement NR-U selon l'invention est compatible d'un réseau d'accès radio NR (5G) et est apte à fonctionner dans une bande non licenciée commune au Wi-Fi. Cet équipement NR-U est apte à mettre en oeuvre un procédé de transmission selon l'invention.

L'équipement NR-U peut aussi bien être une station de base, qu'un terminal mobile. La station de base peut servir (avoir) une ou plusieurs cellules.

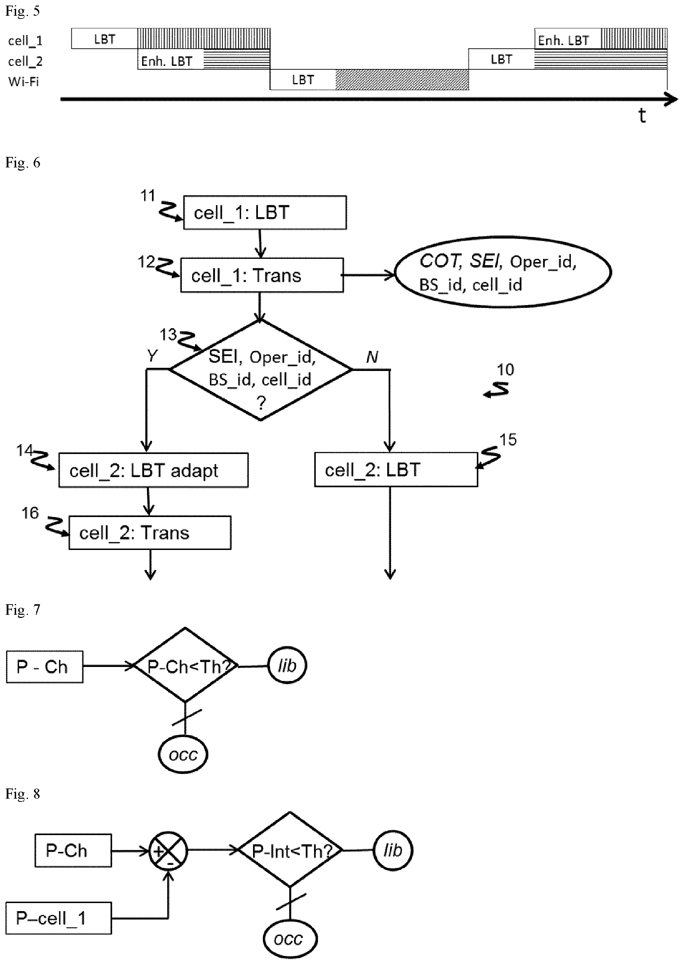

La figure 5 reprend l'exemple de la figure 4 selon lequel deux cellules, cell_1, cell_2, et un équipement Wi-Fi sont en compétition pour accéder au canal pour transmettre des données.

Selon l'invention, si une des cellules, cell_1, gagne l'accès au canal, elle peut partager le canal avec l'autre cellule, cell_2, ce qui donne une opportunité supplémentaire à cette autre cellule d'accéder au canal. Eventuellement, le partage peut intervenir avec plus d'une autre cellule conduisant ainsi à des opportunités multiples d'accéder au canal qui n'existaient pas selon le mécanisme d'accès LBT classique.

Le partage conduit ainsi à une réduction du temps de latence pour l'autre cellule cell_2 et pour toute autre cellule profitant du partage. Le partage conduit en outre à une augmentation de l'efficacité spectrale puisqu'une même bande est utilisée simultanément par les deux cellules cell_1 et cell_2 pour transmettre des données. Ainsi, selon l'invention les deux cellules cell_1 et cell_2 peuvent en particulier servir simultanément deux utilisateurs différents qui ne sont chacun que dans la couverture d'une seule des deux cellules bien que chacune des deux cellules soit dans la couverture l'une de l'autre.

La superposition temporelle de plusieurs transmissions, celle de la cellule cell_1 avec celle de la cellule cell_2, signifie que l'invention peut permettre une connectivité multi-noeuds lorsque les deux cellules servent un même utilisateur. Une connectivité multiple peut intervenir sur une même bande avec la transmission des mêmes données par les deux cellules de manière similaire à un mécanisme CoMP (Cooperative Multi-Point) spécifié dans le standard LTE du 3GPP.

Le déroulement d'un procédé selon l'invention est illustré par les figures 5 et 6.

Selon le procédé 10, la cellule cell_1 met en oeuvre 11 le mécanisme d'accès au canal LBT, écoute avant de transmettre.

Ainsi, de manière connue illustrée par la figure 7, la cellule cell_1 effectue une mesure de la puissance totale P-Ch reçue dans le canal. Une telle mesure est en particulier spécifiée pour le Wi-Fi dans le standard IEEE 802.11-2016, chapitre 17.3.10.6 « CCA requirements ». Selon cette spécification, la puissance du signal détecté est moyennée sur la bande utilisée sur au moins 4µs. Si cette puissance totale est supérieure à un seuil Th déterminé (par exemple spécifié dans le standard) alors la cellule cell_1 en déduit que le canal est considéré occupé *occ.* Si la puissance totale P-Ch est inférieure au même seuil Th alors le canal est considéré libre *lib.* Si le canal est considéré libre, la cellule cell_1 gagne l'accès au canal à l'issue d'une durée fixe suivie du décompte du compteur backoff.

Ayant gagné l'accès au canal, la cellule cell_1 effectue 12 une transmission Trans de données en incluant selon l'invention des données de partage.

Ces données de partage comprennent l'identification d'un groupe de partage de cellules ainsi qu'une information de partage du canal (SEI: Sharing Enabled Information). Un groupe de partage de cellules est identifié par des données d'identification qui comprennent une identité Oper_id d'un opérateur des cellules du groupe, une identité BS_id du noeud associé à chaque cellule du groupe et une identité cell_id de chaque cellule du groupe. L'information de partage du canal autorise ou n'autorise pas le partage du canal avec des équipements/cellules du groupe de partage identifié lors de la transmission.

La transmission de la cellule cell_1 comprend un champ donnant la durée de sa transmission COT.

La cellule cell_2 détecte et teste 13 les données de partage. Si la cellule cell_2 appartient au même groupe de partage que la cellule cell_1 et si l'information de partage du canal transmis par la cellule cell_1 lui autorise le partage, alors la cellule cell_2 peut bénéficier du partage du canal.

Si le test 13 des données de partage du canal est positif *Y,* la cellule cell_2 met en oeuvre 14 le mécanisme LBT adapté Enh_LBT en cas de données à transmettre. L'adaptation selon l'invention est telle que la cellule cell_2 peut considérer le canal comme libre *lib* même si une autre cellule occupe déjà le canal.

Si le test 13 des données de partage du canal est négatif *N,* la cellule cell_2 met en oeuvre 15 le mécanisme LBT classique en cas de données à transmettre.

Selon un mode de réalisation de l'adaptation du mécanisme LBT illustré par la figure 8, la cellule cell_2 évalue séparément la puissance P-cell_1 reçue, associée à une transmission de la cellule cell_1, d'une puissance totale P-Ch reçue.

Si la puissance totale reçue P-Ch moins la puissance reçue P-cell_1 associée à la transmission de la cellule cell_1, dite puissance restante ou interférente P-Int ne dépasse pas le seuil Th alors le canal est considéré libre *lib.*

Si la puissance interférente P-Int dépasse le seuil Th alors le canal est considéré occupé *occ.*

Selon ce mode, la puissance totale reçue peut être mesurée pendant le mécanisme CCA (Clear Channel Assesment) du mécanisme LBT du Wi-Fi de manière similaire à un mode cat4 LAA du LTE. La cellule cell_2 soustraie de la puissance totale Pcca_classique moyenne la puissance reçue P-cell_1 de la cellule cell_1 partageuse pour déterminer la puissance d'interférence P-Int. La détermination du statut du canal est alors effectuée en comparant la puissance d'interférence P-Int au seuil Th.

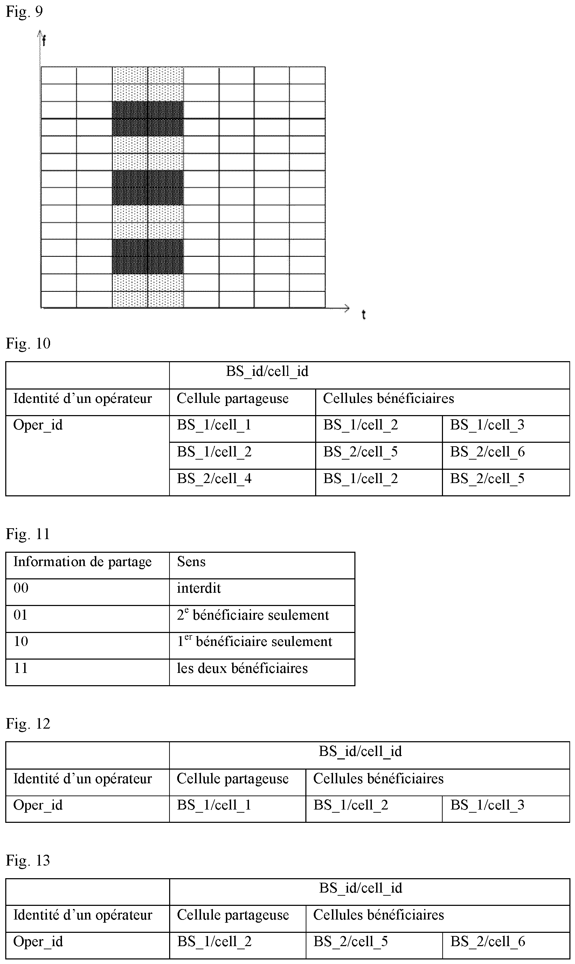

Selon un mode de réalisation de l'adaptation du mécanisme LBT, la cellule cell_2 détermine un niveau reçu d'interférence Interf_csi-im pour déterminer la puissance reçue P-cell_1. Ce niveau d'interférence Interf_csi-im est déterminé à partir de ressources temps-fréquence dédiées à la mesure d'interférence, CSI-IM (Channel State Information-Interférence Measurement) en référence à la spécification technique TS 36.213 v13.0.0 (2016-03) du 3GPP. Ces ressources temps-fréquence illustrées par la figure 9, où elles sont représentées par une couleur sombre, sont exclues de la transmission des données. Par conséquent, la puissance estimée Interf_csi-im à partir de ces ressources CSI-IM correspond à un niveau d'interférences (et de bruit) pures. En parallèle, la cellule cell_2 détermine la puissance totale reçue sur des ressources temps-fréquence déterminées. En référence à la figure 9, ces ressources temps-fréquence déterminées sont par exemple celles qui occupent toute la bande et sont limitées à la même durée temporelle que les ressources CSI-IM. Compte tenu que la puissance reçue P-cell_1 est relativement constante sur la durée COT, cette puissance reçue P-cell_1 peut être déterminée en soustrayant de cette puissance totale reçue sur ces ressources temps-fréquence déterminées la puissance Interf_csi-im.

Lorsque la cellule cell 2 considère le canal comme libre *lib* à l'issue du mécanisme LBT adapté alors elle effectue 16 une transmission Trans en partageant le canal avec la cellule cell_1. La transmission de la cellule cell_2 doit se terminer au plus tard à l'expiration de la durée de transmission COT de la cellule cell_1. Cette contrainte garantie une juste coexistence avec d'autres cellules ou des noeuds Wi-Fi.

Selon un mode de réalisation, l'identification d'un groupe de partage (dit aussi identifiant qui comprend Oper_id, BS_id, cell_id), l'information de partage du canal SEI et la durée de transmission COT font partie d'un champ de signalisation SIG (Signal) qui précède un champ de données transmises lors de la transmission de la cellule cell_1. Le champ SIG est classiquement positionné au début de la durée de transmission. Ce champ de signalisation permet l'adaptation de la transmission à des contraintes d'une bande non licenciée.

Selon un mode de réalisation, l'identification d'un groupe de partage, l'information de partage du canal SEI et la durée de transmission COT font partie d'une signalisation de couches hautes telle que la couche RRC (Radio Resource Control). Cette signalisation comprend par exemple une table de données d'identification spécialement formatées.

La table 1 représentée à la figure 10 est un exemple d'identification de trois groupes de partage différents qui dépendent chacun d'une cellule partageuse. Les groupes identifiés sont tels qu'au plus deux cellules ou noeuds d'un groupe peuvent partager le canal avec une cellule partageuse.

La table 1 donne en outre l'ordre des cellules bénéficiaires. Par exemple pour le premier groupe associé au noeud BS_1 et à la cellule cell_1, la cellule cell_2 du même noeud est prioritaire sur la cellule cell_3 du même noeud pour bénéficier du partage du canal avec la cellule cell_1.

Une table d'information de partage du canal peut compléter la table d'identification. Cette table d'information de partage indique quelles sont la cellule ou les cellules d'un groupe qui sont effectivement autorisées ou indique si aucun partage n'est autorisé. La table 2 représentée à la figure 11 est un exemple d'une telle table d'autorisation de partage.

Avec une telle table d'information de partage du canal, la cellule partageuse peut modifier le nombre de cellules bénéficiaires pour une transmission bien que la constitution du groupe de partage est connue de chaque cellule du groupe et ne change pas.

Une cellule bénéficiaire qui accède au canal en mettant en oeuvre un mécanisme d'accès LBT adapté selon l'invention transmet outre des données des informations qui comprennent l'identification d'un groupe de partage, une information de partage du canal et une durée de transmission. Cette durée de transmission se termine au plus tard en même temps que la durée de transmission dont bénéficie cette cellule bénéficiaire.

Si cette cellule bénéficiaire ne peut être elle-même une cellule partageuse alors elle duplique les données d'identification et l'information de partage du canal transmises par sa cellule partageuse.

Si cette cellule bénéficiaire peut elle-même être une cellule partageuse lors de sa transmission alors elle met à jour les données d'identification d'un groupe de partage et les informations de signalisation qui comprennent une information de partage du canal.

En se basant sur la table 1 représentée à la figure 10, la cellule BS_1/cell_2 peut être bénéficiaire et elle peut elle-même être partageuse.

Selon un exemple la cellule BS_1/cell_2 reçoit de la cellule BS_1/cell_1 des données d'identification d'un groupe de partage donné par la table 3 représentée à la figure 12, et la cellule partageuse BS_1/cell_1 l'autorise à partager le canal.

La cellule BS_1/cell_2 est bénéficiaire de la transmission de la cellule partageuse BS_1/cell_1 et elle peut elle-même faire partager son accès au canal. Ainsi, les données d'identification d'un groupe de partage qu'elle transmet sont celles de la table 4 représentée à la figure 13.

La cellule BS_1/cell_2 transmet une information de partage du canal qui peut être sous la forme d'une table d'information de partage. Cette table peut par exemple être identique à la table 2.

Bien que les étapes aient été représentées et décrites de manière successive, certaines étapes peuvent se dérouler en parallèle.

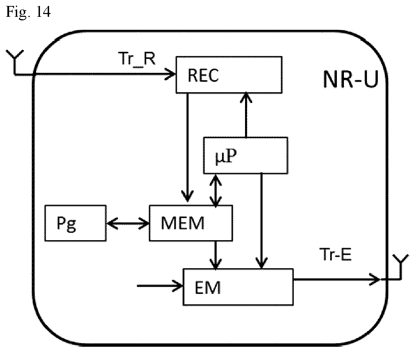

La structure simplifiée d'un équipement NR-U selon l'invention conforme à un protocole NR d'un réseau d'accès cellulaire et apte à émettre dans une bande de fréquence partagée avec un réseau conforme à un deuxième protocole, par exemple Wi-Fi est illustrée par la figure 14. L'équipement NR-U comprend au moins une cellule cell_2 du réseau d'accès cellulaire.

L'équipement NR-U comprend un émetteur EM, un récepteur REC, une mémoire MEM comprenant une mémoire tampon. L'équipement NR-U comprend en outre un processeur µP dont le fonctionnement est commandé par l'exécution d'un programme Pg dont les instructions permettent la mise en oeuvre d'un procédé de transmission de données selon l'invention précédemment décrit.

L'émetteur EM est apte à émettre des données généralement mises en trame Tr_E dans la bande de fréquence partagée en mettant en oeuvre un mécanisme d'accès de type écoute avant de transmettre LBT selon lequel participe le récepteur REC.

Le récepteur REC est apte à recevoir des données généralement mises en trame Tr_R dans la bande de fréquence partagée émises par une autre cellule du réseau cellulaire. Le récepteur REC est apte à recevoir dans la bande de fréquence partagée une identification d'un groupe de partage, une information de partage du canal SEI et une durée de transmission COT transmises par l'autre cellule du réseau d'accès cellulaire.

A l'initialisation, les instructions de code du programme Pg sont par exemple chargées dans la mémoire tampon MEM avant d'être exécutées par le processeur µP.

Selon le déroulement de ces instructions, le processeur µP pilote l'émetteur EM et le récepteur REC pour mettre en oeuvre un mécanisme d'accès de type écoute avant de transmettre LBT avec adaptation Enh_LBT tel que le processeur µP détermine une puissance interférente séparément d'une puissance reçue associée à une transmission de l'autre cellule.

Selon le déroulement de ces instructions, le processeur µP autorise un partage du canal avec l'autre cellule à condition au moins que la cellule appartienne au groupe de partage, que l'information de partage du canal autorise ce partage et que la puissance interférente ne dépasse pas un seuil donné.

En conséquence, l'invention s'applique également à un programme d'ordinateur ou plusieurs, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

## Revendications

1. Procédé (10) de transmission de données mis en oeuvre par un équipement (BS_id, NR-U) ayant une cellule (cell_2), dite deuxième cellule, conforme à un premier protocole (NR) d'un réseau d'accès cellulaire, apte à émettre dans une bande de fréquence partagée avec un réseau conforme à un deuxième protocole (Wi-Fi) et à mettre en oeuvre un mécanisme d'accès de type écoute avant de transmettre (LBT), **caractérisé en ce que** le procédé (10) comprend :
- l'utilisation (11) du mécanisme d'accès de type écoute avant de transmettre (LBT) par une autre cellule (cell_1) dite première cellule et transmission (12) par cette première cellule d'une identification d'un premier groupe de partage, d'une première information de partage du canal (SEI) et d'une durée de transmission (COT),
- l'autorisation (13) du partage du canal avec la première cellule (cell_1) à condition au moins que la deuxième cellule (cell_2) appartienne au même premier groupe de partage et que la première information de partage du canal autorise ce partage,
- l'utilisation (14) du mécanisme d'accès de type écoute avant de transmettre avec adaptation (Enh_LBT) par la deuxième cellule (cell_2) telle que cette deuxième cellule (cell_2) détermine une puissance, dite puissance interférente, qui interfère une transmission de la première cellule (cell_1), cette puissance interférente étant déterminée par la deuxième cellule (cell_2) comme étant une puissance totale reçue (P-Ch) par la deuxième cellule moins une puissance reçue (P-cell_1) associée à une transmission de la première cellule (cell_1),
- une transmission de données par la deuxième cellule partageant le canal avec la première cellule à condition que la puissance interférente ne dépasse pas un seuil donné, cette transmission se terminant au plus tard à la fin de la durée de transmission de la première cellule.

2. Procédé (10) de transmission de données selon la revendication 1 tel qu'une ressource temps-fréquence déterminée exclue de ressources temps-fréquence dédiées à une transmission de la première cellule est utilisée pour déterminer la puissance reçue associée à une transmission de la première cellule.

3. Procédé (10) de transmission de données selon la revendication précédente tel que :
- la deuxième cellule qui partage le canal avec la première cellule transmet une durée de transmission adaptée qui se termine lorsque la durée de transmission de la première cellule se termine, transmet une identification d'un deuxième groupe de partage et une deuxième information de partage du canal (SEI).

4. Procédé (10) de transmission de données selon la revendication précédente tel que le deuxième groupe de partage est différent du premier groupe de partage.

5. Procédé (10) de transmission de données selon l'une des revendications précédentes tel qu'une identification d'un groupe de partage, une information de partage du canal (SEI) et une durée de transmission (COT) font partie d'une signalisation de la couche physique.

6. Procédé (10) de transmission de données selon la revendication précédente tel que l'identification d'un groupe de partage, l'information de partage du canal (SEI) et la durée de transmission (COT) font partie d'un champ de signalisation (SIG) qui précède un champ de données transmises, ce champ de signalisation permettant l'adaptation de la transmission à des contraintes d'une bande non licenciée.

7. Procédé (10) de transmission de données selon l'une des revendications 1 à 4 tel qu'une identification d'un groupe de partage, une information de partage du canal (SEI) et une durée de transmission (COT) font partie d'une signalisation de la couche RRC.

8. Procédé (10) de transmission de données selon la revendication précédente tel que l'identification d'un groupe de partage, l'information de partage du canal et la durée de transmission font partie d'un champ de données transmises.

9. Procédé (10) de transmission de données selon l'une des revendications précédentes tel que :
- l'identification d'un groupe de partage comprend au moins une identité (Oper_id) d'un opérateur de la première cellule et de la deuxième cellule, une identité (BS_id) du noeud associé à la première cellule, une identité (cell_id) de la première cellule, une identité (BS_id) du noeud associé à la deuxième cellule, une identité (cell_id) de la deuxième cellule.

10. Equipement (BS_id, NR-U) ayant une deuxième cellule (cell_2), conforme à un premier protocole (NR) d'un réseau d'accès cellulaire et apte à émettre dans une bande de fréquence partagée avec un réseau conforme à un deuxième protocole (Wi-Fi), mettant en oeuvre un mécanisme d'accès de type écoute avant de transmettre (LBT), l'équipement comprenant :
- un récepteur (REC) apte à recevoir dans la bande de fréquence partagée une identification d'un groupe de partage, une information de partage du canal (SEI) et une durée de transmission (COT) transmises par une première cellule (cell_1) du réseau d'accès cellulaire,
- un émetteur (EM) apte à émettre des données dans la bande de fréquence partagée,
- un processeur (µP) apte à :
- piloter l'émetteur (EM) et le récepteur (REC) et mettre en oeuvre un mécanisme d'accès de type écoute avant de transmettre avec adaptation (Enh_LBT) tel que le processeur détermine une puissance, dite puissance interférente, qui interfère une transmission de la première cellule, cette puissance interférente étant déterminée par la deuxième cellule (cell_2) comme étant une puissance totale reçue (P-Ch) par la deuxième cellule moins une puissance reçue (P-cell_1) associée à une transmission de la première cellule (cell_1)
- autoriser un partage du canal avec la première cellule à condition au moins que la deuxième cellule appartienne au même groupe de partage et que l'information de partage du canal autorise ce partage,
- piloter l'émetteur (EM) pour transmettre des données avec partage du canal avec la première cellule à condition que la puissance interférente ne dépasse pas un seuil donné, cette transmission se terminant au plus tard à la fin de la durée de transmission de la première cellule.

11. Programme d'ordinateur sur un support d'informations, ledit programme comportant des instructions de programme adaptées à la mise en oeuvre d'un procédé selon l'une quelconque des revendications 1 à 10 lorsque ledit programme est chargé et exécuté dans une station de base.

12. Support d'informations comportant des instructions de programme adaptées à la mise en oeuvre d'un procédé selon l'une quelconque des revendications 1 à 10, lorsque ledit programme est chargé et exécuté dans une station de base.

## Patentansprüche

1. Verfahren (10) zur Datenübertragung, das von einer Ausrüstung (BS_id, NR-U) durchgeführt wird, die eine Zelle (cell_2), zweite Zelle genannt, entsprechend einem ersten Protokoll (NR) eines zellularen Zugangsnetzes hat, die geeignet ist, in einem mit einem Netz entsprechend einem zweiten Protokoll (Wi-Fi) gemeinsam genutzten Frequenzband zu senden, und vor der Übertragung einen Zugangsmechanismus vom Typ Abhören durchzuführen (LBT), **dadurch gekennzeichnet, dass** das Verfahren (10) enthält:
- die Verwendung (11) des Zugangsmechanismus vom Typ Abhören vor der Übertragung (LBT) durch eine andere Zelle (cell_1), erste Zelle genannt, und Übertragung (12) durch diese erste Zelle einer Identifikation einer ersten Gruppe gemeinsamer Nutzung, einer ersten Information gemeinsamer Nutzung des Kanals (SEI) und einer Übertragungsdauer (COT),
- die Genehmigung (13) der gemeinsamen Nutzung des Kanals mit der ersten Zelle (cell_1) mindestens unter der Bedingung, dass die zweite Zelle (cell_2) zur gleichen ersten Gruppe gemeinsamer Nutzung gehört, und dass die erste Information gemeinsamer Nutzung des Kanals diese gemeinsame Nutzung genehmigt,
- die Verwendung (14) des Zugangsmechanismus vom Typ Abhören vor der Übertragung mit Anpassung (Enh_LBT) durch die zweite Zelle (cell_2), derart, dass diese zweite Zelle (cell_2) eine Leistung, interferierende Leistung genannt, bestimmt, die mit einer Übertragung der ersten Zelle (cell_1) interferiert, wobei diese interferierende Leistung von der zweiten Zelle (cell_2) als eine von der zweiten Zelle empfangene Gesamtleistung (P-Ch) minus eine empfangene Leistung (P-cell_1) bestimmt wird, die einer Übertragung der ersten Zelle (cell_1) zugeordnet ist,
- eine Datenübertragung durch die zweite Zelle, die den Kanal gemeinsam mit der ersten Zelle nutzt, unter der Bedingung, dass die interferierende Leistung eine gegebene Schwelle nicht überschreitet, wobei diese Übertragung spätestens am Ende der Übertragungsdauer der ersten Zelle endet.

2. Datenübertragungsverfahren (10) nach Anspruch 1, derart, dass eine bestimmte Zeit-Frequenz-Ressource, die aus einer Übertragung der ersten Zelle dedizierten Zeit-Frequenz-Ressourcen ausgeschlossen ist, verwendet wird, um die einer Übertragung der ersten Zelle zugeordnete empfangene Leistung zu bestimmen.

3. Datenübertragungsverfahren (10) nach dem vorhergehenden Anspruch, derart, dass:
- die zweite Zelle, die den Kanal gemeinsam mit der ersten Zelle nutzt, eine geeignete Übertragungsdauer überträgt, die endet, wenn die Übertragungsdauer der ersten Zelle endet, eine Identifikation einer zweiten Gruppe gemeinsamer Nutzung und eine zweite Information gemeinsamer Nutzung des Kanals (SEI) überträgt.

4. Datenübertragungsverfahren (10) nach dem vorhergehenden Anspruch, derart, dass die zweite Gruppe gemeinsamer Nutzung sich von der ersten Gruppe gemeinsamer Nutzung unterscheidet.

5. Datenübertragungsverfahren (10) nach einem der vorhergehenden Ansprüche, derart, dass eine Identifikation einer Gruppe gemeinsamer Nutzung, eine Information gemeinsamer Nutzung des Kanals (SEI) und eine Übertragungsdauer (COT) Teil einer Signalisierung der physikalischen Schicht sind.

6. Datenübertragungsverfahren (10) nach dem vorhergehenden Anspruch, derart, dass die Identifikation einer Gruppe gemeinsamer Nutzung, die Information gemeinsamer Nutzung des Kanals (SEI) und die Übertragungsdauer (COT) Teil eines Signalisierungsfelds (SIG) sind, das einem Feld übertragener Daten vorausgeht, wobei dieses Signalisierungsfeld die Anpassung der Übertragung an Zwänge eines nicht lizenzierten Bands erlaubt.

7. Datenübertragungsverfahren (10) nach einem der Ansprüche 1 bis 4, derart, dass eine Identifikation einer Gruppe gemeinsamer Nutzung, eine Information gemeinsamer Nutzung des Kanals (SEI) und eine Übertragungsdauer (COT) Teil einer Signalisierung der Schicht RRC sind.

8. Datenübertragungsverfahren (10) nach dem vorhergehenden Anspruch, derart, dass die Identifikation einer Gruppe gemeinsamer Nutzung, die Information gemeinsamer Nutzung des Kanals und die Übertragungsdauer Teil eines Feldes übertragener Daten sind.

9. Datenübertragungsverfahren (10) nach einem der vorhergehenden Ansprüche, derart, dass:
- die Identifikation einer Gruppe gemeinsamer Nutzung mindestens eine Identität (Oper_id) eines Betreibers der ersten Zelle und der zweiten Zelle, eine Identität (BS_id) des der ersten ersten Zelle zugeordneten Knotens, eine Identität (cell_id) der ersten Zelle, eine Identität (BS_id) des der zweiten Zelle zugeordneten Knotens, eine Identität (cell_id) der zweiten Zelle enthält.

10. Ausrüstung (BS_id, NR-U), die eine zweite Zelle (cell_2) gemäß einem ersten Protokoll (NR) eines zellularen Zugangsnetzes hat und geeignet ist, in einem mit einem Netz gemäß einem zweiten Protokoll (Wi-Fi) gemeinsam genutzten Frequenzband zu senden, die einen Zugangsmechanismus vom Typ Abhören vor der Übertragung (LBT) verwendet, wobei die Ausrüstung enthält:
- einen Empfänger (REC), der geeignet ist, im gemeinsam genutzten Frequenzband eine Identifikation einer Gruppe gemeinsamer Nutzung, eine Information gemeinsamer Nutzung des Kanals (SEI) und eine Übertragungsdauer (COT) zu empfangen, die von einer ersten Zelle (cell_1) des zellularen Zugangsnetzes übertragen werden,
- einen Sender (EM), der geeignet ist, im gemeinsam genutzten Frequenzband Daten zu senden,
- einen Prozessor (µP), der geeignet ist
- den Sender (EM) und den Empfänger (REC) zu steuern und einen Zugangsmechanismus vom Typ Abhören vor der Übertragung mit Anpassung (Enh_LBT) zu verwenden, derart, dass der Prozessor eine Leistung bestimmt, interferierende Leistung genannt, die mit einer Übertragung der ersten Zelle interferiert, wobei diese interferierende Leistung von der zweiten Zelle (cell_2) als eine von der zweiten Zelle empfangene Gesamtleistung (P-Ch) minus eine empfangene Leistung (P-cell_1) bestimmt wird, die einer Übertragung der ersten Zelle (cell_1) zugeordnet ist,
- eine gemeinsame Nutzung des Kanals mit der ersten Zelle zu genehmigen, mindestens unter der Bedingung, dass die zweite Zelle zur gleichen Gruppe gemeinsamer Nutzung gehört und dass die Information gemeinsamer Nutzung des Kanals diese gemeinsame Nutzung genehmigt,
- den Sender (EM) zu steuern, um Daten mit gemeinsamer Nutzung des Kanals mit der ersten Zelle zu übertragen, unter der Bedingung, dass die interferierende Leistung eine gegebene Schwelle nicht überschreitet, wobei diese Übertragung spätestens am Ende der Übertragungsdauer der ersten Zelle endet.

11. Computerprogramm auf einem Informationsträger, wobei das Programm Programmanweisungen aufweist, die für die Durchführung eines Verfahrens nach einem der Ansprüche 1 bis 10 geeignet sind, wenn das Programm in eine Basisstation geladen und ausgeführt wird.

12. Informationsträger, der Programmanweisungen aufweist, die für die Durchführung eines Verfahrens nach einem der Ansprüche 1 bis 10 geeignet sind, wenn das Programm in eine Basisstation geladen und ausgeführt wird.

## Claims

1. Data transmission method (10) implemented by an equipment (BS_id, NR-U) having a cell (cell_2), called second cell, conforming to a first protocol (NR) of a cellular access network, able to transmit in a frequency band shared with a network conforming to a second protocol (Wi-Fi) and to implement a listen before transmit (LBT) access mechanism, **characterized in that** the method (10) comprises:
- use (11) of the listen before transmit (LBT) access mechanism by another cell (cell_1), called first cell, and transmission (12), by this first cell, of an identity of a first sharing group, of first channel sharing information (SEI) and of a transmission duration (COT),
- authorizing (13) channel sharing with the first cell (cell_1) on the condition at least that the second cell (cell_2) belongs to the same first sharing group and that the first channel sharing information authorizes this sharing,
- use (14) of the adapted listen before transmit access mechanism (Enh_LBT) by the second cell (cell_2), such that this second cell (cell_2) determines a power, called interfering power, that interferes with a transmission of the first cell (cell_1), this interfering power being determined by the second cell (cell_2) as being a total power (P-Ch) received by the second cell minus a received power (P-cell_1) associated with a transmission of the first cell (cell_1),
- a data transmission by the second cell sharing the channel with the first cell on the condition that the interfering power does not exceed a given threshold, this transmission ending, at the latest, at the end of the transmission duration of the first cell.

2. Data transmission method (10) according to Claim 1, such that a determined time-frequency resource excluded from time-frequency resources dedicated to a transmission of the first cell is used to determine the received power associated with a transmission of the first cell.

3. Data transmission method (10) according to the preceding claim, such that:
- the second cell that shares the channel with the first cell transmits an adapted transmission duration that ends when the transmission duration of the first cell ends, transmits an identity of a second sharing group and second channel sharing information (SEI).

4. Data transmission method (10) according to the preceding claim, such that the second sharing group is different from the first sharing group.

5. Data transmission method (10) according to one of the preceding claims, such that an identity of a sharing group, channel sharing information (SEI) and a transmission duration (COT) form part of physical layer signalling.

6. Data transmission method (10) according to the preceding claim, such that the identity of a sharing group, the channel sharing information (SEI) and the transmission duration (COT) form part of a signalling field (SIG) that precedes a transmitted data field, this signalling field allowing the transmission to be adapted to constraints of an unlicensed band.

7. Data transmission method (10) according to one of Claims 1 to 4, such that an identity of a sharing group, channel sharing information (SEI) and a transmission duration (COT) form part of RRC layer signalling.

8. Data transmission method (10) according to the preceding claim, such that the identity of a sharing group, the channel sharing information and the transmission duration form part of a transmitted data field.

9. Data transmission method (10) according to one of the preceding claims, such that:
- the identity of a sharing group comprises at least one identity (Oper_id) of an operator of the first cell and of the second cell, an identity (BS_id) of the node associated with the first cell, an identity (cell_id) of the first cell, an identity (BS_id) of the node associated with the second cell, an identity (cell_id) of the second cell.

10. Equipment (BS_id, NR-U) having a second cell (cell_2), conforming to a first protocol (NR) of a cellular access network and able to transmit in a frequency band shared with a network conforming to a second protocol (Wi-Fi), implementing a listen before transmit (LBT) access mechanism, the equipment comprising:
- a receiver (REC) able to receive, in the shared frequency band, an identity of a sharing group, channel sharing information (SEI) and a transmission duration (COT), transmitted by a first cell (cell_1) of the cellular access network,
- a transmitter (EM) able to transmit data in the shared frequency band,
- a processor (µP) able to:
- drive the transmitter (EM) and the receiver (REC) and implement an adapted listen before transmit access mechanism (Enh_LBT) such that the processor determines a power, called interfering power, interfering with a transmission of the first cell, this interfering power being determined by the second cell (cell_2) as being a total power (P-Ch) received by the second cell minus a received power (P-cell_1) associated with a transmission of the first cell (cell_1),
- authorize channel sharing with the first cell on the condition at least that the second cell belongs to the same sharing group and that the channel sharing information authorizes this sharing,
- drive the transmitter (EM) to transmit data with channel sharing with the first cell on the condition that the interfering power does not exceed a given threshold, this transmission ending, at the latest, at the end of the transmission duration of the first cell.

11. Computer program on an information medium, said program comprising program instructions adapted to implement a method according to any one of Claims 1 to 10 when said program is loaded and executed in a base station.

12. Information medium comprising program instructions adapted to implement a method according to any one of Claims 1 to 10 when said program is loaded and executed in a base station.
